# EUROPÄISCHE PATENTANMELDUNG

(11) **EP 1 422 080 A1**
(43) Veröffentlichungstag der Anmeldung: **26.05.2004**
(21) Anmeldenummer: 02028505.2
(22) Anmeldetag: 19.12.2002
(51) Int. Cl.: B60G 5/02

(54) **Vorrichtung zur Regulierung des Aufstellens einer Tandemachse**

(30) Priorität: 19.11.2002 DE 20217910 U
(71) Anmelder: NAF Neunkirchener Achsenfabrik AG, 91077 Neunkirchen (DE)
(72) Erfinder: Sauer, Ralf, 91077 Neunkirchen am Brand (DE)
(74) Vertreter: Hofstetter, Alfons J., Dr.rer.nat.

(57) **Zusammenfassung**

Die vorliegende Erfindung betrifft eine Vorrichtung zur Regulierung des Aufstellens einer Antriebstandemachse eines Fahrzeuges oder einer selbstfahrenden Arbeitsmaschine, die einen Fahrzeugrahmen und mindestens eine Antriebsachse (12) mit einem Achsgehäuse (14) aufweist, wobei jeweils an den Enden der Antriebsachse (12) eine Antriebstandemachse (16) mit einem Tandemachsengehäuse (18) schwenkbar angeordnet ist, wobei in der Antriebstandemachse (16) das von der Antriebsachse (12) eingeleitete Moment mechanisch auf die an den Enden der Antriebstandemachse (16) angeordneten Räder (20, 22) verteilt wird. Erfindungsgemäß ist ein Gehäuse (74) eines mit Druck beaufschlagbaren Drehkolbenzylinders (24) fest mit dem Achsgehäuse (14) der Antriebsachse (12) verbunden, wobei ein beweglicher Kolben (26) des Drehkolbenzylinders (24) ein nachgeschaltetes Planetengetriebe (28) mit einer Planetenwelle (30) und Planetenrädern (32) antreibt, wobei die Planetenwelle (30) des Planetengetriebes (28) fest mit dem Achsgehäuse (14) oder dem Gehäuse (74) des Drehkolbenzylinders (24) verbunden ist und die Planetenräder (32) auf einen Zahnkranz (76), der mit dem Tandemachsengehäuse (18) verbunden ist, einwirken.

## Beschreibung

Die vorliegende Erfindung betrifft eine Vorrichtung zur Regulierung des Aufstellens einer Antriebstandemachse eines Fahrzeuges oder einer selbstfahrenden Arbeitsmaschine, die einen Fahrzeugrahmen und mindestens eine Antriebsachse mit einem Achsgehäuse aufweist, wobei jeweils an den Enden der Antriebsachse eine Antriebstandemachse mit einem Tandemachsengehäuse schwenkbar angeordnet ist, wobei in der Antriebstandemachse das von der Antriebsachse eingeleitete Moment mechanisch auf die an den Enden der Antriebstandemachse angeordneten Räder verteilt wird.

Derartige Vorrichtungen zur Regulierung des Aufstellens einer Antriebstandemachse eines Fahrzeuges oder einer selbstfahrenden Arbeitsmaschine sind bekannt. Derartige Tandemachsen oder auch Boogieachsen haben jedoch den Nachteil, dass sich die Achsenschwinge unabhängig von Übersetzungsverhältnissen und den geometrischen Verhältnissen mehr oder weniger aufrichtet, wenn ein Drehmoment eingeleitet wird. Dadurch ergibt sich eine ungleichmäßige Verteilung der Achslast zwischen den Vorder- und Hinterrädern, die an den jeweiligen Enden der Achsschwingen angeordnet sind. Dadurch kommt es vor, dass zumindest eines der Räder die Bodenhaftung verliert bzw. der Bodendruck stark reduziert wird. Da die beschriebenen Tandemachsen hauptsächlich in Forstmaschinen, Muldenkippern und Gradern zum Einsatz kommen, die insbesondere in unwegsamen Gelände operieren, führt dies zu deutlichen Einschränkungen während des Betriebs der entsprechenden Fahrzeuge.

Um den genannten Aufstelleffekt zu verhindern, wird bei bekannten Vorrichtungen in der Achsschwinge eine Übersetzung von 1:1 oder von nahezu 1:1 verwendet. Nachteilig hierbei ist jedoch, dass die Komponenten innerhalb der Achsschwinge ein hohes Drehmoment übertragen müssen und daher entsprechend großzügig dimensioniert werden. Derartige Achsschwingen werden daher sehr teuer, schwer und verlieren an Bodenfreiheit. Weitere bekannte Vorrichtungen zur Verhinderung eines Aufstelleffekts einer Tandemachse verwenden ein Doppelplanetengetriebe oder ein Messgetriebe und nutzen dessen Rückdrehmoment um den Aufstelleffekt zu reduzieren. Entsprechende Vorrichtungen sind der DE-A1-19802371 und in der DE-A1-4120801 beschrieben. Nachteilig an diesen Vorrichtungen ist jedoch, dass das Rückdrehmoment sich nicht justieren lässt und immer proportional zum Eingangsmoment ist. Ein Aufstelleffekt, der in manchen Fahrsituationen auch wünschenswert sein kann, lässt sich nicht herbeiführen. Das Vorder- bzw. Hinterrad der Tandemachse lässt sich durch diesen Mechanismus nicht gewollt anheben.

Eine weitere aus dem Stand der Technik bekannte Vorrichtung ist in der DE-A1-19616405 beschrieben. Diese Vorrichtung verwendet Hydraulikzylinder, die außen zwischen einem Tandemkasten und dem Fahrzeugrahmen angebracht werden und mit einem Druck beaufschlagt werden, der proportional zum Betriebsdruck eines antreibenden Hydromotors geschaltet wird. Nachteilig hierbei ist jedoch, dass die außenliegenden Hydraulikzylinder anfällig sind, da sie den Umwelteinflüssen ausgesetzt sind. Zudem ist die Installation zwischen Fahrzeugrahmen und Tandemschwinge aufwendig und schränkt die Bewegungsfreiheit der Tandemachse ein.

Es ist daher Aufgabe der vorliegenden Erfindung, eine Vorrichtung zur Regulierung des Aufstellens einer Antriebstandemachse eines Fahrzeuges oder einer selbstfahrenden Arbeitsmaschine bereitzustellen, die einerseits zuverlässig das ungewollte Aufstellen der Tandemachse in einem vorbestimmbaren Maße verhindert und andererseits ein gewolltes Anheben der Tandemachse ermöglicht.
Gelöst wird diese Aufgabe durch eine Vorrichtung zur Regulierung des Aufstellens einer Tandemachse mit den Merkmalen des Anspruchs 1.

Vorteilhafte Ausgestaltungen sind in den Unteransprüchen beschrieben.

Bei einer erfindungsgemäße Vorrichtung zur Regulierung des Aufstellens einer Tandemachse ist ein Gehäuse eines mit Druck beaufschlagbaren Drehkolbenzylinders fest mit einem Achsgehäuse einer Antriebsachse verbunden, wobei ein beweglicher Kolben des Drehkolbenzylinders ein nachgeschaltetes Planetengetriebe mit einer Planetenwelle und Planetenrädern antreibt, wobei die Planetenwelle des Planetengetriebes fest mit dem Achsgehäuse oder dem Gehäuse des Drehkolbenzylinders verbunden ist und die Planetenräder auf einen Zahnkranz, der mit einem Tandemachsengehäuse verbunden ist, einwirken. Durch die Zwischenschaltung eines Drehkolbenzylinders und des dem Drehkolbenzylinder nachgeschalteten Planetengetriebes ist es möglich, einen vordefinierten Druck auf das Tandemachsengehäuse auszuüben und entweder einem Aufstelleffekt der Tandemachse entgegenzuwirken oder ein aktives Anheben der Tandemachse durchzuführen. Dabei wird die Drehrichtung des Drehkolbens bei Druckeinleitung durch das Planetengetriebe umgekehrt, so dass auf das Tandemachsengehäuse entsprechende Gegenmomente wirken. Durch das Planetengetriebe erfolgt erfindungsgemäß eine Drehmomentverstärkung des vom Drehkolbenzylinder ausgeübten Drehmoments im Bereich von 1:3 bis 1:5. Der Drehkolbenzylinder ist erfindungsgemäß mit einem Hydraulikkreislauf eines Hydromotors des Fahrzeuges oder der selbstfahrenden Arbeitsmaschine verbunden. Es ist aber auch möglich, dass der Drehkolbenzylinder mit einem von einem ersten Hydraulikkreislauf eines Hydromotors des Fahrzeuges oder der selbstfahrenden Arbeitsmaschine unabhängigen zweiten Hydraulikkreislauf verbunden ist. Im letzteren Fall ist es vorteilhafterweise möglich, den Drehkolbenzylinder unabhängig von einem durch den Hydromotor des Fahrzeuges erzeugten Druck mit Druck zu beaufschlagen und somit steuern zu können.

In einer weiteren vorteilhaften Ausgestaltung der Erfindung ist im ersten oder zweiten Hydraulikkreislauf mindestens eine regelbares Druckminderventil vor dem Drehkolbenzylinder angeordnet. Durch die regelbaren Druckminderventile ist es möglich, dass je nach Fahrsituation ein Ausgleichsmoment, das dem Aufstelleffekt entgegenwirkt, zwischen 0 und 100 % eingestellt werden kann. Insbesondere sind dabei im ersten oder zweiten Hydraulikkreislauf, das heißt in dem Hydraulikkreislaufs der Hydromotors oder eines unabhängigen zweiten Hydraulikkreislaufs jeweils zwei regelbare Druckminderventile angeordnet, wobei ein erstes und ein zweites Druckminderventil jeweils in einer zu den Druckkammern des Drehkolbenzylinders führenden Druckleitungen ausgebildet ist. Vorteilhafterweise ist das oder sind die Druckminderventile mit einer Regel- und Einstellvorrichtung verbunden, die den gewünschten und vorgegebenen Ausgleich des Aufstelleffektes vorgibt. Dabei bedeuten 100 % Ausgleich eine gleiche Radlast auf das Vorder- und Hinterrad in jeder Fahrsituation. 0 % Ausgleich bedeuten keinen Ausgleich, also einen Aufstelleffekt in voller Höhe, wodurch eine Situation ohne die erfindungsgemäße Vorrichtung zur Regulierung des Aufstellens einer Tandemachse simuliert wird. Die Höhe des Ausgleicheffekts zur Regulierung des Aufstellens der Antriebstandemachse ist dabei mit der Regel- und Einstellvorrichtung manuell oder automatisch einstellbar. Die Minderung des Drucks durch die Druckminderventile beträgt vorteilhafterweise zwischen 1:2 und 1:5.

In einer weiteren vorteilhaften Ausgestaltung der Erfindung ist ein erstes Ventil in einer Ölzuführungsleitung zum Drehkolbenzylinder und ein zweites Ventil in einer Ölrückführungsleitung des Drehkolbenzylinders ausgebildet. Das erste und zweite Ventil bilden dabei sogenannte Bypassventile, die unter anderem für den Fall, dass der Drehkolbenzylinder über den Hydraulikkreislauf des Hydromotors betrieben wird, verwendet werden können und eine vom Fahrzeugantrieb unabhängige Bedienung des Drehkolbenzylinders erlauben. Somit ist ein Anheben der Tandemachse bzw. des Tandemachsengehäuses unabhängig vom Fahrzeugantrieb möglich.

In einer weiteren vorteilhaften Ausgestaltung der Erfindung ist an dem Tandemachsengehäuse jeweils im Bereich des Vorder- und Hinterrads mindestens ein Dehnmessstreifen angeordnet, wobei die Dehnmessstreifen entsprechend der Radlast des Vorder- und Hinterrads Signale an ein Steuermodul übersenden aus denen sich die aktuelle Radlast des Vorder- und Hinterrads ermitteln lässt, wobei das Steuermodul mit den Druckminderventilen verbunden ist und diese mittels des Steuermoduls regelbar sind. Damit ist eine Feinregulierung der jeweils auftretenden Radlasten bzw. des Lastausgleichs möglich.

In einer weiteren vorteilhaften Ausgestaltung der Erfindung sind die Druckminderventile mit einer Signalvorrichtung verbunden, wobei die Signalvorrichtung derart ausgebildet ist, dass sie die anderen Regelmechanismen der Vorrichtung übersteuert und ein Signal an die Druckminderventile abgibt, welches zu einer Anhebung einer oder mehrerer Tandemachsen führt. Diese Ausgestaltung der Erfindung ermöglicht ein weiteres, vom Fahrzeugantrieb unabhängiges Aufstellen einer oder mehreren Tandemachsen.

Weitere Einzelheiten, Merkmale und Vorteile der Erfindung ergeben sich aus der nachfolgenden Beschreibung mehrerer in der Figuren schematisch dargestellten Ausführungsbeispielen.

Es zeigen
- Figur 1: ein Schnittansicht der erfindungsgemäßen Vorrichtung zur Regulierung des Aufstellens einer Tandemachse im Bereich eines Drehkolbenzylinders;
- Figur 2: eine schematische Darstellung der erfindungsgemäßen Vorrichtung zur Regulierung des Aufstellens einer Tandemachse gemäß einer ersten Ausführungsform; und
- Figur 3: eine schematische Darstellung der erfindungsgemäßen Vorrichtung zur Regulierung des Aufstellens einer Tandemachse gemäß einer zweiten Ausführungsform.

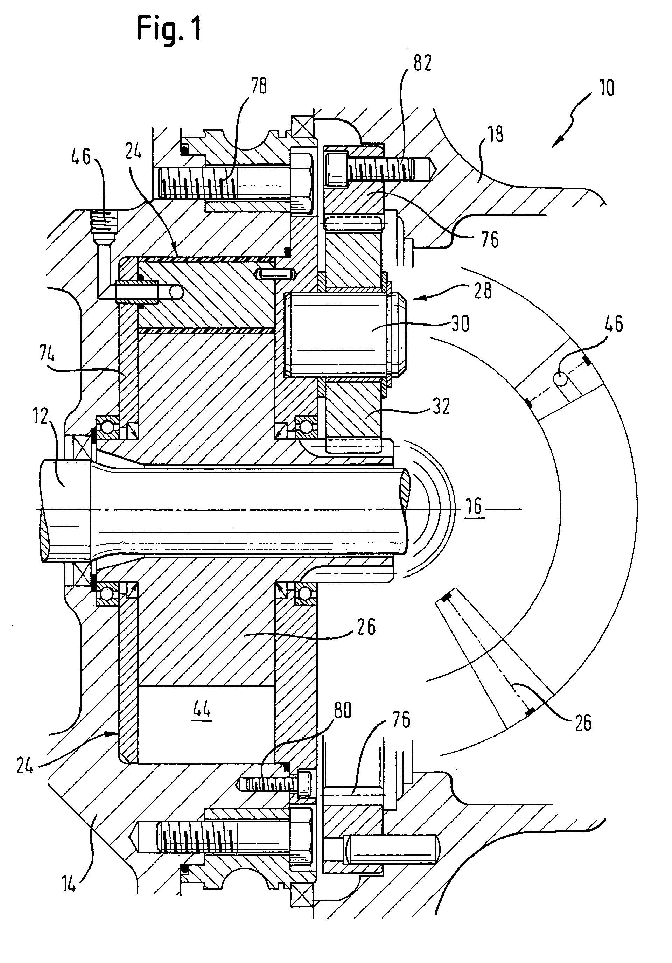

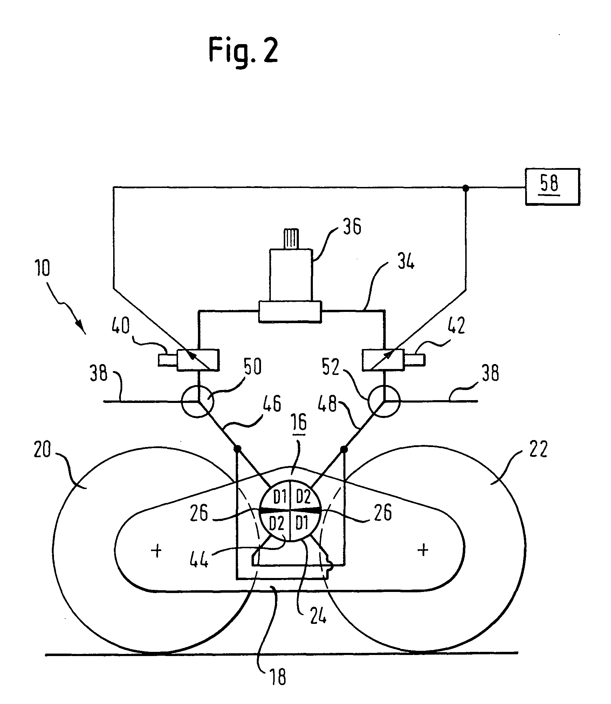

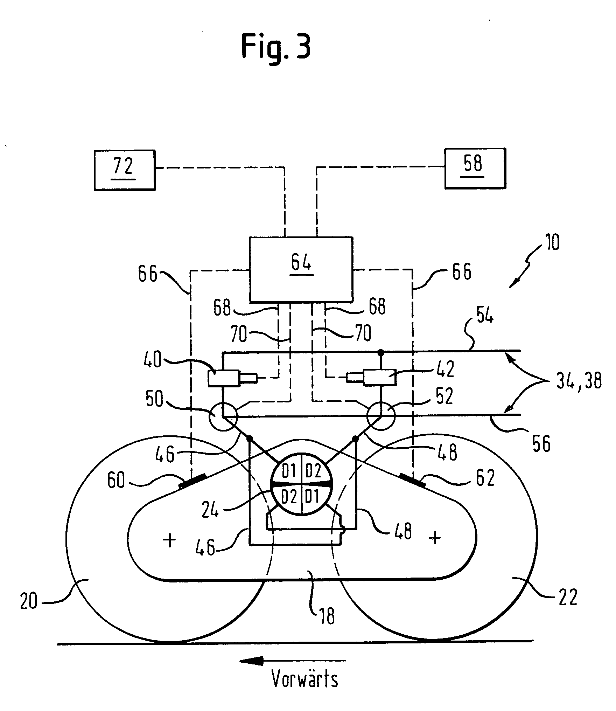

Figur 1 eine Vorrichtung 10 zur Regulierung des Aufstellens einer Antriebstandemachse 16 eines Fahrzeugs oder einer selbstfahrenden Arbeitsmaschine. Das Fahrzeug weist dabei einen Fahrzeugrahmen (nicht dargestellt) auf, an dem ein Achsgehäuse 14 einer Antriebsachse 12 angeordnet ist. Die Antriebstandemachse 16 befindet sich dabei jeweils an den Enden der Antriebsachse 12. Die Antriebstandemachsen 16 sind dabei jeweils mit einem Tandemachsengehäuse 18 schwenkbar angeordnet, wobei in der Antriebstandemachse 16 das von der Antriebsachse 12 eingeleitete Moment mechanisch auf die an den Enden der Antriebstandemachse 16 angeordneten Räder 20, 22 (vergleiche Figuren 2 und 3) verteilt wird.

Man erkennt aus Figur 1, dass ein Gehäuse 74 eines mit Druck beaufschlagbaren Drehkolbenzylinders 24 fest über ein Befestigungsmittel 80 mit dem Achsgehäuse 14 der Antriebsache 12 verbunden ist. Ein beweglicher Kolben 26 des Drehkolbenzylinders 24 treibt ein nachgeschaltetes Planetengetriebe 28 mit einer Planetenwelle 30 und Planetenräder 32 an. Die Planetenwelle 30 ist dabei fest mit dem Achsgehäuse 14 oder dem Gehäuse 74 des Drehkolbenzylinders 24 verbunden. In dem dargestellten Beispiel ist das Planetengetriebe 28 mit dem Gehäuse 74 des Drehkolbenzylinders 24 verbunden. Die Befestigungsmittel 78 dienen zur Befestigung des Tandemachsenlagers mit dem Achsgehäuse 14. Des weiteren erkennt man, dass die Planetenräder 32 des Planetengetriebes 28 auf einen Zahnkranz 76, der mit dem Tandemachsengehäuse 18 verbunden ist, einwirken. Somit wird das Drehmoment des Drehkolbenzylinders 24 durch das Planetengetriebe 28 verstärkt. Die Drehmomentverstärkung liegt dabei in einem Bereich von 1:3 bis 1:5. Des weiteren erkennt man, dass der mit Druck beaufschlagte Drehkolbenzylinder 24 über eine Druckleitung 46 mit der hydraulischen Anlage des Fahrzeugs (nicht dargestellt) verbunden ist. Die Wirkweise des Drehkolbenzylinders 24 der Vorrichtung 10 wird aus den Figuren 2 und 3 deutlich.

Figur 2 zeigt eine schematische Darstellung der Vorrichtung 10 gemäß einem ersten Ausführungsbeispiel. Man erkennt, dass der Drehkolbenzylinder 24 mit einem Hydraulikkreislauf 34 eines Hydromotors 36 des Fahrzeugs oder der selbstfahrenden Arbeitsmaschine verbunden ist. In diesem ersten Hydraulikkreislauf 34 sind in den jeweiligen Druckleitungen 46, 48 je ein Druckminderventil 40, 42 angeordnet. Die Druckminderventile 40, 42 sind regelbar ausgebildet. Die Druckleitungen 46, 48 führen von dem Hydromotor jeweils zu einer Druckkammer 44 des Drehkolbenzylinders 24. Somit erzeugt der Drehkolbenzylinder 24 ein Drehmoment, das sich proportional zum Abtriebsmoment des Hydromotors 36 verhält. Die Druckminderventile 40, 42 mindern den vom Hydromotor ausgehenden Druck in einem Bereich von 1:2 bis 1:5.

Des weiteren erkennt man, dass die Druckminderventile 40, 42 mit einer Regel- und Einstellvorrichtung 58 verbunden sind. Mit der Regel- und Einstellvorrichtung 58 ist es möglich, den Druck, der durch die Druckminderventile 40, 42 an den Drehkolbenzylinder weitergegeben wird, zu regeln und somit eine Vorgabe zum Ausgleich des Aufrichteffekts zu geben. Die Höhe des Ausgleichseffekts beträgt dabei zwischen 0 und 100 %. 100 % Ausgleich bedeuten eine gleiche Radlast auf das Vorder- und Hinterrad 20, 22 in jeder Fahrsituation. 0 % Ausgleich bedeuten keinen Ausgleich, also einen Aufstelleffekt in voller Höhe.

Die Druckleitungen 46, 48 enden jeweils in entsprechenden, sich gegenüberliegen Druckkammern D1, D2. Der von dem Drehkolben 26 bzw. im Drehkolbenzylinder 24 erzeugte Druck beträgt üblicherweise zwischen 200 und 300 bar. Da dieser Druck nicht ausreichend ist, um mit dem Drehkolbenzylinder 24 ein Drehmoment zu erzeugen, welches ein Aufstellen des Vorder- oder Hinterrads 20, 22 vollständig verhindert, wird über das in Figur 1 beschriebene Planetengetriebe 28 und den damit verbundenen Zahnkranz 76, eine Drehmomentverstärkung erzielt. Die Übersetzung bzw. die Drehmomentverstärkung beträgt dabei zwischen 1:3 und 1:5. Da das Planetengetriebe 28 die Drehrichtung des Drehkolbenzylinders 24 umkehrt kann ein dem Aufstelleffekt entgegenwirkendes Moment an das Tandemachsengehäuse 18 wirken.

Des weiteren erkennt man, dass in den Druckleitungen 46, 48 des Hydraulikkreislaufs 34 zwei Ventile 50, 52 angeordnet sind, die als sogenannte Bypassventile einen zweiten Hydraulikkreislauf 38 ausbilden. Damit ist es möglich, eine vom Fahrzeugantrieb unabhängige Bedienung des Drehkolbenzylinders 24 zu ermöglichen und somit zum Beispiel das Anheben der Tandemachse bzw. des Tandemachsengehäuses 18 zu ermöglichen.

Figur 3 zeigt eine weitere Ausführungsform der Vorrichtung 10 zur Regulierung des Aufstellens einer Antriebstandemachse 16. Man erkennt, dass an dem Tandemachsengehäuse 18 jeweils im Bereich des Vorder- und Hinterrads 20, 22 ein Dehnmessstreifen 60, 62 angeordnet ist. Die Dehnmessstreifen 60, 62 übersenden entsprechend der Radlast des Vorder- und Hinterrads 20, 22 Signale an ein Steuermodul 64. Hierfür dienen Signalleitungen 66. Aus den an das Steuermodul 64 übersandten Signalen lässt sich die aktuelle Radlast des Vorder- und Hinterrads 20, 22 ermitteln. Da das Steuermodul 64 mit den Druckminderventilen 40, 42 über entsprechende Steuerleitungen 68 verbunden ist, können diese entsprechend der ermittelten aktuellen Radlast geregelt werden. Somit ist eine Feinregulierung des Aufstellens der Antriebstandemachse 16 bzw. des Tandemachsengehäuses 18 möglich. Ist zum Beispiel das Hinterrad 22 stärker belastet, dann öffnet das Steuermodul 64 das regelbare Druckminderventil 40 und das Ventil 52 zur drucklosen Ölrückführungsleitung 56. Somit werden die Druckkammern D1 des Drehkolbenzylinders 24 mit Druck beaufschlagt, während die Druckkammern D2 druckfrei sind. Dadurch entsteht im Drehkolbenzylinder 24 ein Drehmoment im Uhrzeigersinn, das durch das Planetengetriebe 28 verstärkt und umgekehrt wird. Es wird somit mehr Last auf das Vorderrad 20 verlagert, womit der gewünschte Ausgleichseffekt erzielt ist.

Das Steuermodul 64 ist des weiteren mit der Regel- und Einstellvorrichtung 58 und einer Signalvorrichtung 72 verbunden. Dabei reguliert die Regel- und Einstellvorrichtung 58 wiederum die Höhe des Ausgleichseffekts zur Regulierung des Aufstellens der Antriebstandemachse 16. Die Einstellungen können dabei manuell oder automatisch erfolgen. Die Signalvorrichtung 72 ist derart ausgebildet, dass sie die anderen Regelmechanismen der Vorrichtung 10 übersteuert und ein Signal an die Druckminderventile 40, 42 über das Steuermodul 64 abgibt, welches zu einer Anhebung einer oder mehrerer Tandemachsen 16 führt. So kann zum Beispiel das Druckminderventil 42 komplett geöffnet werden, wodurch die Druckkammern D2 im Drehkolbenzylinder 24 mit vollem Druck beaufschlagt werden, was zu einem Anheben des vorderen Rades 20 führen würde.

Des weiteren erkennt man, dass das Steuermodul 64 über entsprechende Signalleitungen 70 mit den Ventilen 50, 52 verbunden ist, so dass diese durch das Steuermodul 64 regelbar sind.

## Patentansprüche

1. Vorrichtung zur Regulierung des Aufstellens einer Antriebstandemachse eines Fahrzeuges oder einer selbstfahrenden Arbeitsmaschine, die einen Fahrzeugrahmen und mindestens eine Antriebsachse (12) mit einem Achsgehäuse (14) aufweist, wobei jeweils an den Enden der Antriebsachse (12) eine Antriebstandemachse (16) mit einem Tandemachsengehäuse (18) schwenkbar angeordnet ist, wobei in der Antriebstandemachse (16) das von der Antriebsachse (12) eingeleitete Moment mechanisch auf die an den Enden der Antriebstandemachse (16) angeordneten Räder (20, 22) verteilt wird,
**dadurch gekennzeichnet,**
**daß** ein Gehäuse (74) eines mit Druck beaufschlagbaren Drehkolbenzylinders (24) fest mit dem Achsgehäuse (14) der Antriebsachse (12) verbunden ist, wobei ein beweglicher Kolben (26) des Drehkolbenzylinders (24) ein nachgeschaltetes Planetengetriebe (28) mit einer Planetenwelle (30) und Planetenrädern (32) antreibt, wobei die Planetenwelle (30) des Planetengetriebes (28) fest mit dem Achsgehäuse (14) oder dem Gehäuse (74) des Drehkolbenzylinders (24) verbunden ist und die Planetenräder (32) auf einen Zahnkranz (76), der mit dem Tandemachsengehäuse (18) verbunden ist, einwirken.

2. Vorrichtung nach Anspruch 1,
**dadurch gekennzeichnet,**
**daß** der Drehkolbenzylinder (24) mit einem Hydraulikkreislauf (34) eines Hydromotors (36) des Fahrzeuges oder der selbstfahrenden Arbeitsmaschine verbunden ist.

3. Vorrichtung nach Anspruch 1,
**dadurch gekennzeichnet,**
**daß** der Drehkolbenzylinder (24) mit einem von einem ersten Hydraulikkreislauf (34) eines Hydromotors (36) des Fahrzeuges oder der selbstfahrenden Arbeitsmaschine unabhängigen zweiten Hydraulikkreislauf (38) verbunden ist.

4. Vorrichtung nach Ansprüche 2 oder 3,
**dadurch gekennzeichnet,**
**daß** im ersten oder zweiten Hydraulikkreislauf (34, 38) mindestens ein regelbares Druckminderventil (40, 42) vor dem Drehkolbenzylinder (24) angeordnet ist.

5. Vorrichtung nach Anspruch 4,
**dadurch gekennzeichnet,**
**daß** im ersten oder zweiten Hydraulikkreislauf (34, 38) zwei regelbare Druckminderventile (40, 42) angeordnet sind, wobei ein erstes und ein zweites Druckminderventil (40, 42) jeweils in einer zu den Druckkammern (44) des Drehkolbenzylinders (24) führenden Druckleitungen (46, 48) ausgebildet sind.

6. Vorrichtung nach einem der vorhergehenden Ansprüche,
**dadurch gekennzeichnet,**
**daß** ein erstes Ventil (50) in einer Ölzuführungsleitung (54) zum Drehkolbenzylinder (24) und ein zweites Ventil (52) in einer Ölrückführungsleitung (56) des Drehkolbenzylinders (24) ausgebildet ist.

7. Vorrichtung nach einem der Ansprüche 4 bis 6,
**dadurch gekennzeichnet,**
**daß** das oder die Druckminderventile (40, 42) mit einer Regel- und Einstellvorrichtung (58) verbunden ist.

8. Vorrichtung nach Anspruch 7,
**dadurch gekennzeichnet,**
**daß** mit der Regel- und Einstellvorrichtung (58) die Höhe des Ausgleichseffekts zur Regulierung des Aufstellens der Antriebstandemachse (16) manuell oder automatisch einstellbar ist.

9. Vorrichtung nach einem der Ansprüche 4 bis 8,
**dadurch gekennzeichnet,**
**daß** an dem Tandemachsengehäuse (18) jeweils im Bereich des Vorder- und Hinterrads (20, 22) mindestens ein Dehnmessstreifen (60, 62) angeordnet ist, wobei die Dehnmessstreifen (60, 62) entsprechend der Radlast des Vorder- und Hinterrads (20, 22) Signale an ein Steuermodul (64) übersenden aus denen sich die aktuelle Radlast des Vorder- und Hinterrads (20, 22) ermitteln lässt, wobei das Steuermodul (64) mit den Druckminderventilen (40, 42) verbunden ist und diese mittels des Steuermoduls (64) regelbar sind.

10. Vorrichtung nach einem der Ansprüche 4 bis 9,
**dadurch gekennzeichnet,**
**daß** die Minderung des Drucks durch die Druckminderventile (40, 42) 1:2 bis 1:5 beträgt.

11. Vorrichtung nach einem der Ansprüche 4 bis 10,
**dadurch gekennzeichnet,**
**daß** die Druckminderventile (40, 42) mit einer Signalvorrichtung (72) verbunden sind, wobei die Signalvorrichtung (72) derart ausgebildet ist, daß sie die anderen Regelmechanismen der Vorrichtung (10) übersteuert und ein Signal an die Druckminderventile (40, 42) abgibt, welches zu einer Anhebung einer oder mehrerer Tandemachsen (16) führt.

12. Vorrichtung nach einem der vorhergehenden Ansprüche,
**dadurch gekennzeichnet,**
**daß** durch das Planetengetriebe (28) eine Drehmomentverstärkung des vom Drehkolbenzylinders (24) ausgeübten Drehmoments im Bereich von 1:3 bis 1:5 erfolgt.
